(19) Europäisches Patentamt
European Patent Office
Office européen des brevets

(11) **EP 3 734 518 A1**

(12) **EUROPEAN PATENT APPLICATION**
published in accordance with Art. 153(4) EPC

(43) Date of publication:
**04.11.2020 Bulletin 2020/45**

(21) Application number: **18905264.0**

(22) Date of filing: **14.12.2018**

(51) Int Cl.:
***G06N 3/08*** *(2006.01)*

(86) International application number:
**PCT/CN2018/121033**

(87) International publication number:
**WO 2019/153878 (15.08.2019 Gazette 2019/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.02.2018 CN 201810125826**

(71) Applicant: **HUAWEI TECHNOLOGIES CO., LTD.**
**Shenzhen, Guangdong 518129, (CN)**

(72) Inventors:
• XU, Yixu
  **Shenzhen, Guangdong 518129 (CN)**
• WANG, Yan
  **Shenzhen, Guangdong 518129 (CN)**
• ZHANG, Jin
  **Shenzhen, Guangdong 518129 (CN)**
• WANG, Yuanyuan
  **Shenzhen, Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(54) **DATA PROCESSING METHOD BASED ON MACHINE LEARNING, AND RELATED DEVICE**

(57)     Embodiments of this application disclose a machine learning-based data processing method and a related device, to resolve a prior-art problem that service experience is affected due to an increase in an exchange latency. The method in the embodiments of this application includes: receiving, by a first network element, installation information of an algorithm model from a second network element, where the first network element is a user plane network element UPF or a base station, and the second network element is configured to train the algorithm model; installing, by the first network element, the algorithm model based on the installation information of the algorithm model; and collecting, by the first network element, data after the algorithm model is successfully installed, and performing prediction based on the data by using the algorithm model.

```
Second network          First network
element                 element
   |                        |
301. Obtain a trained       |
algorithm model             |
   |                        |
   | 302. Installation information of the algorithm model
   |----------------------->|
   |                        |
   |      303. Install the algorithm model based
   |      on the installation information of the
   |      algorithm model
   |                        |
   | 304. Installation result indication
   |<-----------------------|
   |                        |
   |      305. Perform prediction based on
   |      data by using the algorithm model
   |                        |
```

FIG. 3

# EP 3 734 518 A1

## Description

This application claims priority to Chinese Patent Application No. 201810125826.9, filed with the Chinese Patent Office on February 6, 2018 and entitled "MACHINE LEARNING-BASED DATA PROCESSING METHOD AND RELATED DEVICE", which is incorporated herein by reference in its entirety.

## TECHNICAL FIELD

This application relates to the communications field, and in particular, to a machine learning-based data processing method and a related device.

## BACKGROUND

Machine learning (machine learning, ML) is a multi-domain interdisciplinary subject. How a computer simulates or implements a learning behavior of a human, to obtain new knowledge or skills, and reorganize an existing knowledge structure to continuously improve performance of the computer is researched in machine learning. With the advent of the big data era, machine learning, especially deep learning applicable to large-scale data, is getting more attention and is increasingly widely used, including application of machine learning in a wireless communications network.

Machine learning may include steps such as data collection, feature engineering, training, and prediction. In a wireless communications network, in the prior art, all these steps are performed by one network element, and the network element may be referred to as a network data analytics (network data analytics, NWDA) network element. After collecting sufficient data and training a model, the NWDA stores the model in a network entity of the NWDA. A subsequent prediction process is that a user plane function (user plane function, UPF) network element sends data or a feature vector required for prediction to the NWDA, and the NWDA performs prediction to obtain a result and sends the result to a policy control function (policy control function, PCF) network element. The PCF generates a policy by using the prediction result, and delivers the generated policy to the UPF network element. The generated policy may be setting a quality of service (quality of service, QoS) parameter, or the like, and is executed by the UPF network element, so that the generated policy becomes effective.

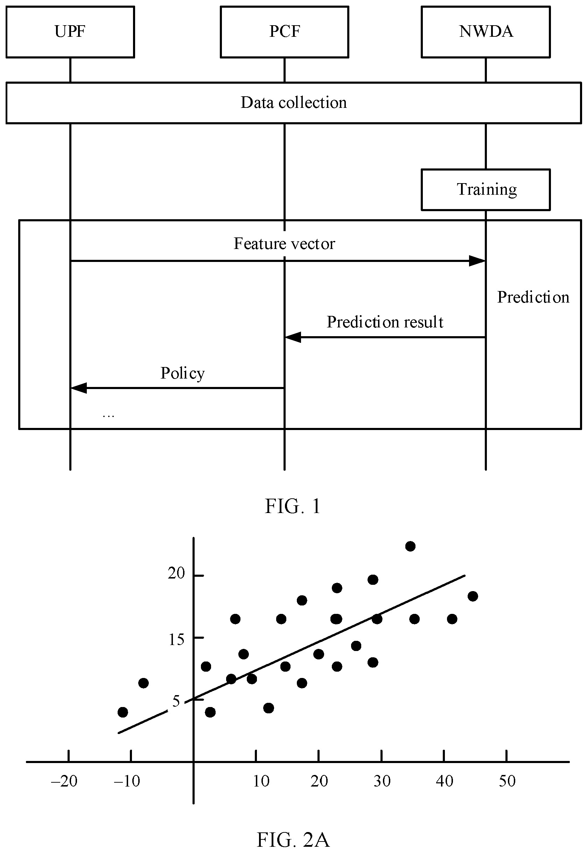

Because there are many real-time service scenarios in a network, the network has a high requirement on a service processing latency. For example, in various algorithms of radio resource management (radio resource management, RRM)/a radio transmission technology (radio transmission technology, RTT) of a radio access network, service processing at a second level or even a transmission time interval (transmission time interval, TTI) level (millisecond level) needs to be reached. In the prior art, training and prediction are integrated into the NWDA network element for execution, as shown in FIG. 1. For example, that the NWDA performs prediction after training a model includes: the NWDA receives a feature vector from the UPF network element, inputs the feature vector into the trained model, to obtain a prediction result, and sends the prediction result to the PCF, and then the PCF generates a policy corresponding to the prediction result, and delivers the policy to a related user plane network element to execute the policy. However, during actual application, each time of information exchange between devices may have a latency. Therefore, a relatively large quantity of exchanges in the prior art correspondingly increase the latency, and service experience of a service having a high real-time requirement is affected.

## SUMMARY

Embodiments of this application provide a machine learning-based data processing method and a related device, to resolve a prior-art problem that service experience is affected due to an increase in an exchange latency.

A first aspect of the embodiments of this application provides a machine learning-based data processing method, including: receiving, by a first network element, installation information of at least one algorithm model from a second network element, where the first network element is a UPF or a base station, and the second network element is configured to train the at least one algorithm model; installing, by the first network element after receiving the installation information of the at least one algorithm model, the at least one algorithm model based on the installation information; and collecting, by the first network element, data after the at least one algorithm model is successfully installed in the first network element, and performing prediction based on the data by using the at least one algorithm model. In this embodiment of this application, the second network element performs a training step in machine learning, and the first network element installs the algorithm model, and performs, by using the algorithm model, prediction based on the data collected by the first network element. In this way, a logical function of model training is separated from a logical function of prediction in a network architecture. After obtaining the data, the first network element may perform prediction based on the data by using the installed algorithm model, thereby reducing an exchange latency, and resolving the prior-art problem that service experience is affected due to an increase in the exchange latency.

In a possible design, in a first implementation of the first aspect of the embodiments of this application, the installation information of the at least one algorithm model includes the following information: a unique identifier ID of the at least one algorithm model, an algorithm type of the at least one algorithm model, a structure parameter of the at least one algorithm model, and an installation indication of the at least one algorithm model, where the installation indication of the at least one algorithm model is used to indicate to install the at least one algorithm model. In this implementation, content included in the installation information is refined, so that installation of the algorithm model is more detailed and operable.

In a possible design, in a second implementation of the first aspect of the embodiments of this application, the installation information of the at least one algorithm model further includes policy index information, and the policy index information includes a prediction result of the at least one algorithm model and identification information of a policy corresponding to the prediction result. In this implementation, the installation information of the at least one algorithm model may further include the policy index information, so that the first network element can find, based on the policy index information, the identification information of the policy corresponding to the prediction result, thereby providing an implementation condition for the first network element to determine the policy based on the prediction result.

In a possible design, in a third implementation of the first aspect of the embodiments of this application, before the collecting, by the first network element, data, the method further includes: receiving, by the first network element, collection information from the second network element, where the collection information includes at least an identifier ID of a to-be-collected feature. In this implementation, the first network element further receives the collection information from the second network element, so that the first network element obtains, based on the identifier ID of the to-be-collected feature, a value of the to-be-collected feature corresponding to the collected data, to perform prediction. This describes a source of a parameter required by the first network element to perform prediction, thereby improving operability of the embodiments of this application.

In a possible design, in a fourth implementation of the first aspect of the embodiments of this application, after the receiving, by the first network element, collection information from the second network element, the method further includes: sending, by the first network element, the collection information and a unique identifier ID of a target algorithm model to a third network element, where the target algorithm model is at least one model in the at least one algorithm model; and receiving, by the first network element, a target feature vector corresponding to the collection information and the unique identifier ID of the target algorithm model that are sent by the third network element, where the target algorithm model is used to perform prediction based on the data. In this implementation, the operation of collecting the target feature vector may be transferred to the third network element for execution, and the first network element performs a function of performing prediction based on the model. This reduces workload of the first network element.

In a possible design, in a fifth implementation of the first aspect of the embodiments of this application, the method may further include: sending, by the first network element, the unique identifier ID of the target algorithm model, a target prediction result, and target policy index information corresponding to the target algorithm model to a fourth network element, where the target prediction result is used to determine a target policy, and the target prediction result is a result output by inputting the target feature vector into the target algorithm model; and receiving, by the first network element, identification information of the target policy from the fourth network element. In this implementation, the first network element transfers a function of determining the target policy based on the target prediction result to the fourth network element for execution, so that workload of the first network element is reduced. In addition, with reference to the fourth implementation of the first aspect, different functions are separately implemented by a plurality of network elements, so that network flexibility is further improved.

In a possible design, in a sixth implementation of the first aspect of the embodiments of this application, if the at least one algorithm model is successfully installed, the method further includes: receiving, by the first network element, a target operation indication and the unique identifier ID that is of the at least one algorithm model from the second network element, where the target operation indication is used to indicate the first network element to perform a target operation on the at least one algorithm model, and the target operation may include but is not limited to any one of the following operations: modifying the at least one algorithm model, deleting the at least one algorithm model, activating the at least one algorithm model, or deactivating the at least one algorithm model. In this implementation, an operation is added. After the algorithm model is installed, the operation such as modification or deletion may be further performed on the algorithm model, so that various requirements that may appear during actual application are better met, and an edge device does not require an upgrade and a service is not interrupted.

In a possible design, in a seventh implementation of the first aspect of the embodiments of this application, when the target operation is modifying the at least one algorithm model, the method further includes: receiving, by the first network element, installation information of the modified at least one algorithm model from the second network element. In this implementation, when the algorithm model needs to be modified, the second network element further needs to send the installation information of the modified algorithm model to the first network element for reinstallation, so that operation steps are more complete in this embodiment.

In a possible design, in an eighth implementation of the first aspect of the embodiments of this application, if the at least one algorithm model fails to be installed, the method further includes: sending, by the first network element, an installation failure cause indication to the second network element, to notify the second network element of an installation failure cause. In this implementation, if the algorithm model fails to be installed, the first network element needs to feed back a cause why the algorithm model fails to be installed. This increases solutions in the embodiments of this application.

A second aspect of the embodiments of this application provides a machine learning-based data processing method, including: obtaining, by a second network element, a trained algorithm model; and sending, by the second network element after obtaining the algorithm model, installation information of the algorithm model to a first network element, so that the first network element installs the algorithm model based on the installation information of the algorithm model, where the algorithm model is used for performing prediction based on data collected by the first network element, and the first network element is a UPF or a base station. In this embodiment of this application, the second network element performs a training step in machine learning, and the first network element installs the algorithm model, and performs, by using the algorithm model, prediction based on the data collected by the first network element. In this way, a logical function of model training is separated from a logical function of prediction in a network architecture. After obtaining the data, the first network element may perform prediction based on the data by using the installed algorithm model, thereby reducing an exchange latency, and resolving the prior-art problem that service experience is affected due to an increase in the exchange latency.

In a possible design, in a first implementation of the second aspect of the embodiments of this application, the installation information of the algorithm model includes the following information: a unique identifier ID of the algorithm model, an algorithm type of the algorithm model, a structure parameter of the algorithm model, and an installation indication of the algorithm model, where the installation indication of the algorithm model is used to indicate the first network element to install the algorithm model. In this implementation, content included in the installation information is refined, so that installation of the algorithm model is more detailed and operable.

In a possible design, in a second implementation of the second aspect of the embodiments of this application, the installation information of the algorithm model further includes policy index information, and the policy index information includes an output result of the algorithm model and identification information of a policy corresponding to the output result. In this implementation, the installation information of the algorithm model may further include the policy index information, so that the first network element can find, based on the policy index information, the identification information of the policy corresponding to the prediction result, thereby providing an implementation condition for the first network element to determine the policy based on the prediction result.

In a possible design, in a third implementation of the second aspect of the embodiments of this application, after the sending, by the second network element, installation information of the algorithm model to a first network element, the method further includes: receiving, by the second network element, an installation failure cause indication from the first network element when the first network element fails to install the algorithm model. In this implementation, if the algorithm model fails to be installed, the second network element receives a cause why the algorithm model fails to be installed that is fed back by the first network element, so that the embodiments of this application are more operable.

In a possible design, in a fourth implementation of the second aspect of the embodiments of this application, the method further includes: sending, by the second network element, collection information to the first network element, where the collection information includes at least an identifier ID of a to-be-collected feature. In this implementation, the collection information sent by the second network element is used, so that the first network element obtains, based on the identifier ID of the to-be-collected feature, a value of the to-be-collected feature corresponding to the collected data, to perform prediction. This describes a source of a parameter required by the first network element to perform prediction, thereby improving operability of the embodiments of this application.

A third aspect of the embodiments of this application provides a network element. The network element is a first network element, the first network element may be a user plane network element UPF or a base station, and includes: a first transceiver unit, configured to receive installation information of at least one algorithm model from a second network element, where the second network element is configured to train the at least one algorithm model; an installation unit, configured to install the at least one algorithm model based on the installation information that is of the at least one algorithm model and that is received by the transceiver unit; a collection unit, configured to collect data; and a prediction unit, configured to: after the installation unit succeeds in installing the at least one algorithm model, perform, by using the at least one algorithm model, prediction based on the data collected by the collection unit. In this embodiment of this application, the second network element performs a training step in machine learning, the installation unit installs the algorithm model, and the prediction unit performs, by using the algorithm model, prediction based on the data collected by the collection unit. In this way, a logical function of model training is separated from a logical function of prediction in a network architecture. After the collection unit obtains the data, the prediction unit may perform prediction based on the data by using the installed algorithm model, thereby reducing an exchange latency, and resolving the prior-art problem that service experience is affected due to an increase in the exchange latency.

In a possible design, in a first implementation of the third aspect of the embodiments of this application, the installation information of the at least one algorithm model includes the following information: a unique identifier ID of the at least one algorithm model, an algorithm type of the at least one algorithm model, a structure parameter of the at least one algorithm model, and an installation indication of the at least one algorithm model, where the installation indication of the at least one algorithm model is used to indicate to install the at least one algorithm model. In this implementation, content included in the installation information is refined, so that installation of the algorithm model is more detailed and operable.

In a possible design, in a second implementation of the third aspect of the embodiments of this application, the installation information of the at least one algorithm model may further include policy index information, and the policy index information includes a prediction result of the at least one algorithm model and identification information of a policy corresponding to the prediction result. In this implementation, the installation information of the at least one algorithm model may further include the policy index information, so that the first network element can find, based on the policy index information, the identification information of the policy corresponding to the prediction result, thereby providing an implementation condition for the first network element to determine the policy based on the prediction result.

In a possible design, in a third implementation of the third aspect of the embodiments of this application, the first transceiver unit is further configured to: receive collection information from the second network element, where the collection information includes at least an identifier ID of a to-be-collected feature. In this implementation, the first transceiver unit further receives the collection information from the second network element, so that the first network element obtains, based on the identifier ID of the to-be-collected feature, a value of the to-be-collected feature corresponding to the collected data, to perform prediction. This describes a source of a parameter required by the first network element to perform prediction, thereby improving operability of the embodiments of this application.

In a possible design, in a fourth implementation of the third aspect of the embodiments of this application, the network element further includes: a second transceiver unit, configured to send the collection information and a unique identifier ID of a target algorithm model to a third network element, where the target algorithm model is at least one model in the at least one algorithm model; and the second transceiver unit is further configured to receive a target feature vector corresponding to the collection information and the unique identifier ID of the target algorithm model from the third network element, where the target algorithm model is used to perform a prediction operation. In this implementation, the operation of collecting the target feature vector may be transferred to the third network element for execution, and the first network element performs a function of performing prediction based on the model. This reduces workload of the first network element.

In a possible design, in a fifth implementation of the third aspect of the embodiments of this application, the first network element further includes: a third transceiver unit, configured to send the unique identifier ID of the target algorithm model, a target prediction result, and target policy index information corresponding to the target algorithm model to a fourth network element, where the target prediction result is used to determine a target policy, and the target prediction result is a result obtained by inputting the target feature vector into the target algorithm model; and the third transceiver unit is further configured to receive identification information of the target policy from the fourth network element. In this implementation, the function of determining the target policy based on the target prediction result is transferred to the fourth network element for execution, so that workload of the first network element is reduced. In addition, with reference to the fourth implementation of the first aspect, different functions are separately implemented by a plurality of network elements, so that network flexibility is further improved.

In a possible design, in a sixth implementation of the third aspect of the embodiments of this application, the first transceiver unit is further configured to: receive a target operation indication and the unique identifier ID that is of the at least one algorithm model from the second network element, where the target operation indication is used to indicate the first network element to perform a target operation on the at least one algorithm model, and the target operation includes modifying the at least one algorithm model, deleting the at least one algorithm model, activating the at least one algorithm model, or deactivating the at least one algorithm model. In this implementation, an operation is added. After the algorithm model is installed, the operation such as modification or deletion may be further performed on the algorithm model, so that various requirements that may appear during actual application are better met, and an edge device does not require an upgrade and a service is not interrupted.

In a possible design, in a seventh implementation of the third aspect of the embodiments of this application, when the target operation is modifying the at least one algorithm model, the first transceiver unit is further configured to: receive installation information of the modified at least one algorithm model from the second network element. In this implementation, when the algorithm model needs to be modified, the second network element further needs to send the installation information of the modified algorithm model to the first transceiver unit for reinstallation, so that operation steps are more complete in this embodiment.

In a possible design, in an eighth implementation of the third aspect of the embodiments of this application, after the at least one algorithm model fails to be installed, the first transceiver unit is further configured to: send an installation failure cause indication to the second network element. In this implementation, if the algorithm model fails to be installed, the first transceiver unit further needs to feed back a cause why the algorithm model fails to be installed to the second network element. This increases solutions in the embodiments of this application.

A fourth aspect of the embodiments of this application provides a network element. The network element is a second network element and includes: a training unit, configured to obtain a trained algorithm model; a transceiver unit, configured to send installation information of the trained algorithm model to a first network element, where the installation information of the algorithm model is used to install the algorithm model, the algorithm model is used for performing prediction based on data, and the first network element is a user plane network element UPF or a base station. In this embodiment of this application, the training unit of the second network element performs a training step in machine learning, and the first network element installs the algorithm model, and performs, by using the algorithm model, prediction based on the data collected by the first network element. In this way, a logical function of model training is separated from a logical function of prediction in a network architecture. After obtaining the data, the first network element may perform prediction based on the data by using the installed algorithm model, thereby reducing an exchange latency, and resolving the prior-art problem that service experience is affected due to an increase in the exchange latency.

In a possible design, in a first implementation of the fourth aspect of the embodiments of this application, the installation information of the algorithm model includes the following information: a unique identifier ID of the algorithm model, an algorithm type of the algorithm model, a structure parameter of the algorithm model, and an installation indication of the algorithm model, where the installation indication of the algorithm model is used to indicate the first network element to install the algorithm model. In this implementation, content included in the installation information is refined, so that installation of the algorithm model is more detailed and operable.

In a possible design, in a second implementation of the fourth aspect of the embodiments of this application, the installation information of the algorithm model further includes policy index information, and the policy index information includes an output result of the algorithm model and identification information of a policy corresponding to the output result. In this implementation, the installation information of the algorithm model may further include the policy index information, so that the first network element can find, based on the policy index information, the identification information of the policy corresponding to the prediction result, thereby providing an implementation condition for the first network element to determine the policy based on the prediction result.

In a possible design, in a third implementation of the fourth aspect of the embodiments of this application, the transceiver unit is further configured to: receive an installation failure cause indication from the first network element when the first network element fails to install the algorithm model. In this implementation, if the algorithm model fails to be installed, the transceiver unit receives a cause why the algorithm model fails to be installed that is fed back by the first network element, so that the embodiments of this application are more operable.

In a possible design, in a fourth implementation of the fourth aspect of the embodiments of this application, the transceiver unit is further configured to: send collection information to the first network element, where the collection information includes at least an identifier ID of a to-be-collected feature. In this implementation, the collection information sent by the transceiver unit of the second network element is used, so that the first network element obtains, based on the identifier ID of the to-be-collected feature, a value of the to-be-collected feature corresponding to the collected data, to perform prediction. This describes a source of a parameter required by the first network element to perform prediction, thereby improving operability of the embodiments of this application.

A fifth aspect of the embodiments of this application provides a communications apparatus. The communications apparatus has a function of implementing a behavior of the first network element or a behavior of the second network element in the foregoing method design. The function may be implemented by hardware, or may be implemented by hardware by executing corresponding software. The hardware or the software includes one or more modules corresponding to the foregoing function. The module may be software and/or hardware.

In a possible implementation, the communications apparatus includes a storage unit, a processing unit, and a communications unit.

The storage unit is configured to store program code and data that are required by the communications apparatus. The processing unit is configured to invoke the program code, to control and manage an action of the communications apparatus. The communications unit is configured to support the communications apparatus in communicating with another device.

In a possible implementation, a structure of the communications apparatus includes a processor, a communications interface, a memory, and a bus. The communications interface, the processor, and the memory are connected to each other by using the bus. The communications interface is configured to support communication between the communications apparatus and another device. The memory is configured to store program code and data that are required by the communications apparatus. The processor is configured to invoke the program code, to support the first network element or the second network element in performing a corresponding function in the foregoing method.

A sixth aspect of the embodiments of this application provides an apparatus. The apparatus includes a memory. The memory is configured to store an instruction. When the instruction stored in the memory is executed by a processor, the processor implements a corresponding function in the foregoing method performed by the first network element or the second network element, for example, sending or processing data and/or information in the foregoing method. The apparatus may include a chip, or may include a chip and another discrete component.

A seventh aspect of the embodiments of this application provides a system. The system includes the first network element in the first aspect and the second network element in the second aspect, or the first network element in the third aspect and the second network element in the fourth aspect.

An eighth aspect of the embodiments of this application provides a computer-readable storage medium. The computer-readable storage medium stores an instruction; when the instruction is run on a computer, the computer is enabled to perform the methods according to the foregoing aspects.

A ninth aspect of this application provides a computer program product including an instruction. When the computer program product runs on a computer, the computer is enabled to perform the methods in the foregoing aspects.

It can be learned from the foregoing technical solutions that the embodiments of this application include the following advantages: A first network element receives installation information of an algorithm model from a second network element, where the first network element is a user plane network element UPF or a base station, and the second network element is configured to train the algorithm model. The first network element installs the algorithm model based on the installation information of the algorithm model. The first network element collects data after the algorithm model is successfully installed, and performs prediction based on the data by using the algorithm model. In the embodiments of this application, the second network element performs a training step in machine learning, and the first network element installs the algorithm model, and performs, by using the algorithm model, prediction based on the data received by the first network element. In this way, a logical function of a model is separated from a logical function of prediction in a network architecture. After obtaining the data, the first network element may perform prediction based on the data by using the installed algorithm model, thereby reducing an exchange latency, and resolving the prior-art problem that service experience is affected due to an increase in the exchange latency.

## BRIEF DESCRIPTION OF DRAWINGS

FIG. 1 is a flowchart of a possible machine learning-based method in the prior art;
FIG. 2A is a schematic diagram of possible linear regression;
FIG. 2B is a schematic diagram of possible logistic regression;
FIG. 2C is a schematic diagram of a possible CART classification;
FIG. 2D is a schematic diagram of a possible random forest and decision tree;
FIG. 2E is a schematic diagram of a possible SVM classification;
FIG. 2F is a schematic diagram of a possible Bayesian classification;
FIG. 2G is a schematic structural diagram of a possible neural network model;
FIG. 2H is a diagram of a possible system architecture according to this application;
FIG. 3 is a flowchart of a possible machine learning-based data processing method according to an embodiment of this application;
FIG. 4 is a flowchart of another possible machine learning-based data processing method according to an embodiment of this application;
FIG. 5 is a schematic diagram of an embodiment of a possible first network element according to the embodiments of this application;
FIG. 6 is a schematic diagram of an embodiment of a possible second network element according to the embodiments of this application;
FIG. 7 is a schematic block diagram of a communications apparatus according to an embodiment of this application;
FIG. 8 is a schematic structural diagram of a communications apparatus according to an embodiment of this application; and
FIG. 9 is a schematic structural diagram of a system according to an embodiment of this application.

## DESCRIPTION OF EMBODIMENTS

The following clearly and completely describes the technical solutions in the embodiments of this application with reference to the accompanying drawings in the embodiments of this application.

With continuous improvement of machine learning, it is possible to extract potential useful information and rules from massive data sets. A main purpose of machine learning is to extract a useful feature and then construct mapping from the feature to a label based on an existing instance. The label is used to distinguish between data, and the feature is used to describe a property of the data. It may be understood that the feature is a basis for performing determining on the data, and the label is a conclusion made on the data. During actual application, machine learning may include the following several steps:

Step 1: Data collection. The data collection is obtaining various types of raw data from an object that generates a dataset, and storing the raw data in a database or a memory for training or prediction.

Step 2: Feature engineering (feature engineering, FE). The feature engineering is a specific process of machine learning, and a core part of the feature engineering includes feature processing. The feature processing includes data preprocessing, for example, feature selection (feature selection, FS) and dimension reduction. The raw data has a large quantity of redundant, irrelevant, and noise features. Therefore, the raw data needs to be cleaned, deduplicated, and denoised. Preprocessing is performed, that is, simple structured processing is performed on the raw data, to extract a feature of training data, perform a correlation analysis on the training data, and so on. Feature selection is an effective means to reduce redundant and irrelevant features.

Step 3: Model training. After the training data is prepared, an appropriate algorithm, feature, and label are selected. The selected feature and label and the prepared training data are input into the algorithm, and then a computer executes the training algorithm. Common algorithms include logistic regression, a decision tree, a support vector machine (support vector machine, SVM), and the like. There may further be a plurality of types of algorithms derived based on each algorithm. After training of a single training algorithm is complete, a machine learning model is generated.

Step 4: Prediction. Sample data that needs to be predicted is input into the machine learning model obtained through training, to obtain a prediction value output by the model. It should be noted that, based on different algorithm problems, the output prediction value may be a real number, or may be a classification result. The prediction value is content that is obtained through prediction based on machine learning.

It should be noted that, in a process of completing application of the machine learning algorithm, a beneficial effect brought by data feature engineering, algorithm selection, and an analysis and prediction result is the most important. An intermediate process and a model structure in algorithm training and prediction processes may be considered as a black box. For a model-driven architecture design, models that are generated through training by using different machine learning algorithms and that are used for prediction need to be reified, combined, and abstracted. The following briefly describes several common machine learning algorithms separately.

1. Regression algorithm

Common regression algorithms include linear regression, logistic (logistics) regression, and the like. Linear regression is a method for modeling a relationship between a continuous dependent variable y and one or more predicted variables x. FIG. 2A is a schematic diagram of possible linear regression. An objective of the linear regression is to predict a target value of numeric data. An objective of training a regression algorithm model is to solve regression coefficients. Once these coefficients are obtained, the target value may be predicted based on an input of a new sampled feature vector. For example, the regression coefficients are multiplied by values of the input feature vector, and then products are summed, that is, an inner product of the regression coefficients and the input feature vector is calculated, and a result obtained through summation is the prediction value. The prediction model may be represented by using the following formula:

$$z = w_0 x_0 + w_1 x_1 + w_2 x_2 + \ldots + w_n x_n + n$$

The formula may be $z = w^T x + b$ when being rewritten in a vector form.

A regression coefficient $w^T$ and a constant term b are obtained through training. The constant term b is also generated through training, and is used to perform overall adjustment on the model and is irrelevant to a specific feature, b may not exist, that is, b=0. Prediction is performed based on the coefficient, the constant term, and a new feature value.

It should be noted that, a key point of a model that is based on a linear regression algorithm is that an input feature x needs to be linear. However, raw data is usually not linear in an actual case. Therefore, feature engineering processing needs to be performed to obtain the input feature. For example, 1/x, x2, and lg(x) are used. In this way, a feature value obtained after conversion is linearly correlated with a result. The model includes the following composition information:

a model input: a feature vector X;
a model output: a regression value Z;
a regression coefficient obtained through training: a vector $w^T$ ;
a constant term: b; and
a step function: NONE

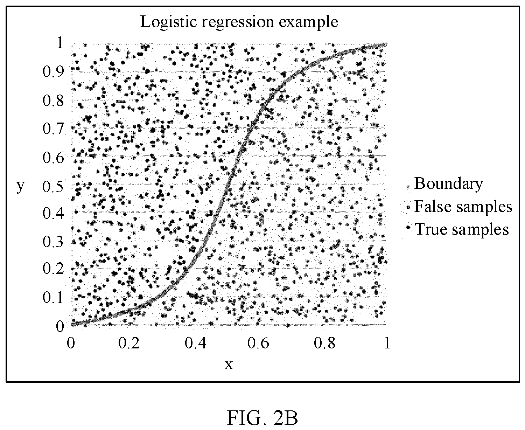

During actual application, if dependent variables are not consecutive but classified, a logistic link function may be used to convert linear regression to logistic regression. For example, if the dependent variables are based on binary classification (0/1, True/False, Yes/No), logistic regression may be used. Logistic regression is a classification method. Therefore, a final output of a logistic regression model is necessarily of a discrete classification type. Usually, an output of linear regression is input to a step function, and then the step function outputs a binary classification or multi-class classification value. FIG. 2B is a schematic diagram of possible logistic regression. A curve may be used as a boundary line. A sample above the boundary line is a positive example, and a sample below the boundary line is a negative example. A prediction model may be represented by using the following sigmoid function:

$$S(x) = 1/(1 + e^{-x}),$$

where
an input of the sigmoid function is denoted as z, and may be obtained by using the following formula: $z = w^T x + b$.

In addition, a model that is based on a logistic regression algorithm includes the following composition information:

a model input: a feature vector X indication;
a model output: a classification result Z;
a regression coefficient obtained through training: a vector $w^T$;
a constant term: b;
non-linear functions: a sigmoid function, a step function, and a logarithmic equation, and the like; and
a step function value separation interval threshold, where for example, the threshold may be 0.5, to be specific, 1 is selected as the step function value if a step function value is greater than 0.5, and 0 is selected as the step function value if a step function value is less than 0.5. Certainly, based on multi-classification, the threshold correspondingly has more than one value.

In addition, the regression algorithm further includes at least one of other regression methods such as least squares regression (least square), stepwise regression (stepwise regression), and ridge regression (ridge regression), and details are not described herein.

2. Decision tree

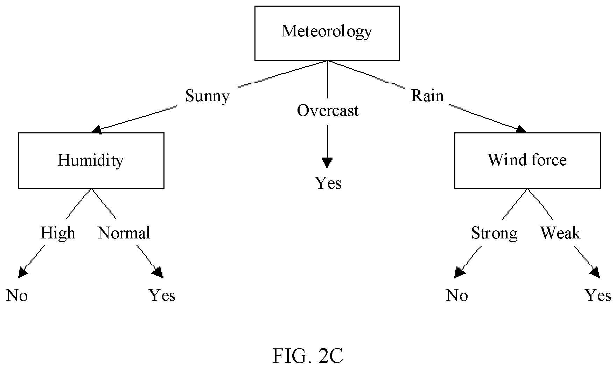

Usually, training of the decision tree is based on information entropy or Gini coefficient of input feature data. Then, a classification feature priority and classification determining method are determined. In addition, the decision tree needs to be pruned and optimized to reduce overfitting of model prediction and model complexity. There are mainly two types of decision trees: a classification tree (an output is a classmark of a sample) and a regression tree (an output is a real number). A classification and regression tree (classification and regression tree, CART) includes the foregoing two types of decision trees. FIG. 2C is a schematic diagram of a possible CART classification. It can be learned that, the CART is a binary tree, and each non-leaf node has two nodes. Therefore, for the first subtree, a quantity of leaf nodes is one more than the quantity of non-leaf nodes, and composition information of a CART algorithm-based model may include:

a model input: a feature vector X;
a model output: a classification result Z; and
a model description: a model is of a tree classification structure, for example, the tree classification structure is {ROOT: {Node: {Leaf}}}. For ease of understanding, for example, when UE decides, based on a reference signal received power (reference signal receiving power, RSRP) and a signal-to-noise ratio (signal noise ratio, SNR) of a target cell during movement of the UE, whether the UE is handed over to the target cell, {'RSRP>-110': {0: 'no', 1: {'SNR>10': {0: 'no', 1: 'yes'}}}} can be used. To be specific, whether the RSRP is greater than -110 dBm is first determined. If the RSRP is determined to be 0 (that is, not greater than -110 dBm), the UE is not handed over to the target cell. If the RSRP is determined to be 1 (that is, greater than -110 dBm), whether the SNR is greater than 10 dB is further determined. If the SNR is determined to be 0 (that is, less than 10 dB), the UE is not handed over to the target cell ('no'). If the SNR is determined to be 1 (that is, greater than 10 dB), the UE is handed over to the target cell ('yes').

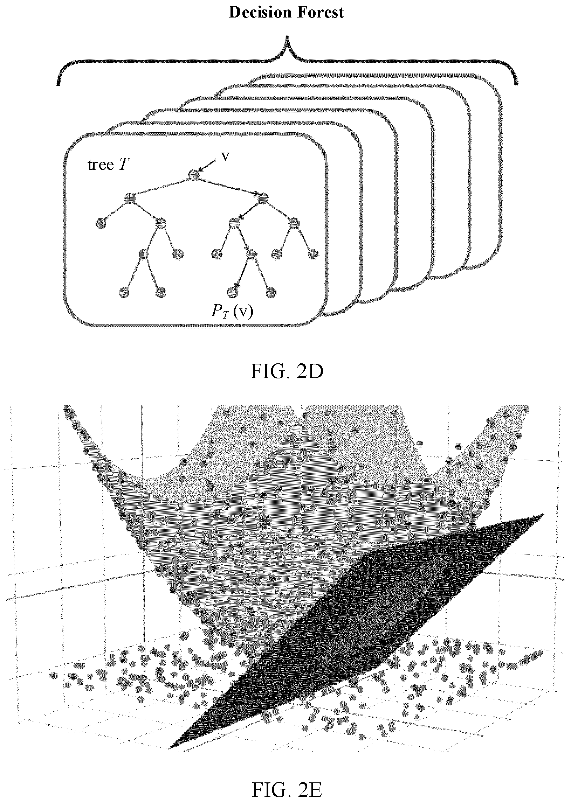

In addition, the decision tree may further include a random forest, and the random forest includes a multi-classifier and a regression tree CART. FIG. 2D is a schematic diagram of a possible random forest and decision tree. The random forest is a classifier that trains and predicts a sample by using a plurality of trees, and the trees are not associated with each other. During training, for each tree, a training set used by the tree is obtained from a total training set through sampling with replacement. Some samples in the training set may appear in a training set of a tree for a plurality of times, or may never appear in a training set of a tree. When nodes of each tree are trained, selected features are randomly selected from all features. Randomness of each tree in sample and feature selection is independent to some extent. This can effectively resolve an overfitting problem of a single decision tree.

In a prediction process, a plurality of trees in the forest are used for prediction separately. Each tree generates a corresponding classification value, and classification results of the plurality of trees are used together for decision-making to obtain a final classification result. A mathematical model of the decision tree may be expressed as:

$$G(x) = \sum_{c=1}^{c} IF(b(x) = c) * G_c(x)$$ . The model description may be summarized into three parts: a plurality of decision trees, a corresponding feature and method, a possible classification result description, and a final classification selection method. The composition information may include:

a model input: a feature vector X;
a model output: a classification result Z; and
a model description: a model includes several decision trees, that is, includes the foregoing several decision trees, and details are not described herein again; and
a voting method: including an absolute majority and a relative majority. The absolute majority is a voting result in which a quantity of a value of a prediction result is greater than half (that is, 0.5) or another value. For example, if a random forest model includes five trees, and prediction results are 1, 1, 1, 3, and 2 respectively, the prediction result is 1. The relative majority means that a minority is subordinate to a majority. For example, if a random forest model includes three trees, and prediction results are 1, 2, and 2 respectively, the prediction result is 2.

3. SVM

SVM is a learning algorithm in which supervision-based learning is performed and that is for data classification and regression analysis. When samples cannot be linearly separated (linearly separable) by using a linear model, a spatial hyperplane needs to be found to separate different types of samples. FIG. 2E is a schematic diagram of a possible SVM classification. In addition, the SVM further requires high tolerance for local disturbance of a sample. The so-called hyperplane may be expressed by using the following linear equation: $w^T x + b = 0$, where $w^T$ is a regression coefficient, and b is a constant. A key operation performed by the SVM on a sample is implicitly mapping low-dimensional feature data to a high-dimensional feature space, and the mapping may change two types of non-linear separable points in the low-dimensional space into linear separable points. A method of this process is referred to as a kernel trick (kernel trick). A used spatial mapping function is referred to as a kernel function (kernel function). The kernel function is suitable for use in a support vector machine. A commonly used radial basis kernel function that is also referred to as a Gaussian kernel function is used as an example:

$$k(x, y) = \exp(\frac{-\| x - y \|^2}{2\sigma^2}),$$

where
x is any point in a space, y is a center of the kernel function, and $\sigma$ is a width parameter of the kernel function. In addition to the Gaussian kernel function, there is a linear kernel function, a polynomial kernel function, a Laplacian kernel function, a sigmoid kernel function, and the like. This is not limited herein.

Lagrange multiplier alpha values of points in two hyperplanes of $w^T x + b = -1$ and $w^T x + b = 1$ are greater than 0, and alpha values of all other points are 0. Therefore, new samples may be classified provided that the points that fall at two sides of the hyperplanes are found, and the alpha values of the points are calculated. Therefore, an obvious advantage of the SVM is that only a small amount of data is required to perform accurate prediction and find a global optimal solution. Composition information of a model that is based on an SVM algorithm may include:

a model input: a feature vector X;
a trained support vector: SVs(x);
a Lagrangian coefficient corresponding to the trained support vector: $\alpha$s;

a label value corresponding to the support vector: SV Label(y);

a kernel function method: k, for example, a so-called radial basis function (radial basis function, RBF);

a kernel function parameter: for example, a polynomial parameter, a Gaussian kernel bandwidth, or the like, which needs to match the kernel function method; a constant term: b; and

a prediction value classification method: for example, a Sign method.

### 4. Bayesian classifier

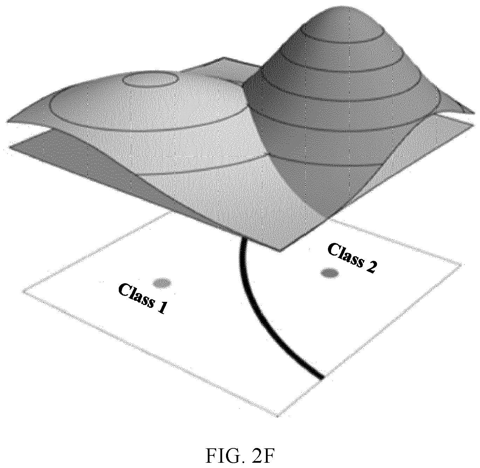

The Bayesian classifier is a probability model. FIG. 2F is a schematic diagram of a possible Bayesian classification. Class 1 and class 2 may be understood as two classifications. For example, whether a packet belongs to a specific type of service is classified into Yes and No. A theoretical basis of the Bayesian classifier is the Bayesian decision theory, which is a basic method for implementing decision under a probability framework. A basis of probability inference is the Bayesian theorem: $P(A|B) = \dfrac{P(B|A)P(A)}{P(B)}$. $P(A|B)$ is a posterior probability. P (B|A is an occurrence probability of B in a condition that a pattern belongs to a class A, and is referred to as a class-conditional probability density of B. P(A) is an occurrence probability of the class A in a researched identification problem, and is also referred to as a prior probability. P(B) is a probability density of the feature vector B.

When the Bayesian classifier is applied to a machine learning algorithm, a feature type of a model designed based on the algorithm needs to be substituted into:

$$P(Y|X_1, X_2 \ldots X_n) = \frac{P(Y)P(X_1, X_2 \ldots X_n|Y)}{P(X_1, X_2 \ldots X_n)}.$$

For all classes $Y$, $P(X)$ is the same, and the foregoing Bayesian formula can be approximately equal to

$$P(Y|X_1, X_2 \ldots X_n) = P(X_1|Y)P(X_1|Y) \ldots P(X_1|Y)P(Y) \approx \prod_{i=1}^{d} P(X_i|Y)P(Y)$$ according to the

Markov model.

In this way, it is easy to derive composition information of a model of which a classification is predicted based on an input feature vector, including: an input layer feature and feature method, a P(Y) classification type prior probability list, and a P(Xi|Y) feature value maximum likelihood estimation list.

### 5. Neural network

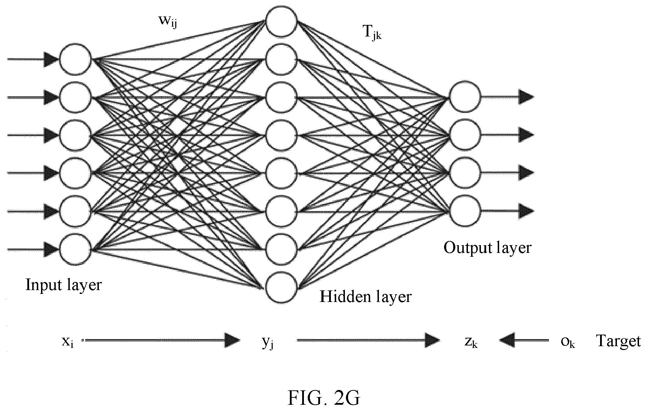

FIG. 2G is a schematic structural diagram of a possible neural network model. A complete neural network model includes an input layer (input layer), an output layer (output layer), and one or more hidden layers (hidden layers). It may be considered that the neural network model is a multi-layer binary perception, and a single-layer binary perception model is similar to a regression model. A unit of the input layer is an input of a hidden layer unit, and an output of the hidden layer unit is an input of an output layer unit. A connection between two perceptions has a weight, and each perception at a $t^{th}$ layer is associated with each perception at a $(t-1)^{th}$ layer. Certainly, the weight may alternatively be set to 0, so that the connection is substantially canceled.

There may be a plurality of logit functions used in a model, for example, sigmoid, softplus, and ReLU. Neural network layers in a same model may be activated based on different logit functions. A most common neural network training process may be a result-to-input inference process, to gradually reduce an error and adjust a weight of a neuron, that is, an error backpropagation (error Back Propagation, BP) algorithm. A principle of the BP may be understood as follows: An error of a previous layer of the output layer is estimated by using an error after an output, and an error of a previous-previous layer is estimated by using the error of the previous layer. In this way, estimated errors of all layers are obtained. The estimated error herein may be understood as a partial derivative. A connection weight of each layer is adjusted based on this type of partial derivative, and an output error is recalculated by using the adjusted connection weight, until the output error meets a requirement or a quantity of iterations exceeds a specified value.

With reference to FIG. 2G, it is assumed that the network structure includes an input layer including i neurons, a hidden layer including j neurons, and an output layer including k neurons. In this case, an input-layer network element $x_i$ acts on an output-layer network element by using a hidden-layer network element. An output signal $z_k$ is generated

through non-linear transformation. Each sample used for network training includes an input vector X and an expected output value t. A deviation between a network output value Y and the expected output value t is adjusted by adjusting a connection weight $w_{ij}$ between the input-layer network element and the hidden-layer network element, a connection weight $T_{jk}$ between the hidden-layer network element and the output-layer network element, and a neural unit threshold, so that an error decreases in a gradient direction. After repeated learning and training, network parameters (a weight and a threshold) corresponding to a minimum error are determined, and the training stops. In this case, the trained neural network can process input information of a similar sample, and output information that has undergone non-linear conversion and has a minimum error.

Composition information of a neural-network-based model includes:

an input layer, where a feature vector X = $\{x_1, x_2, x_3, ..., x_i\}$;
an output-layer network element output algorithm, for example, $z_k = f(\sum T_{jk} * y_j - \theta_k)$, where f is a non-linear function, $T_{jk}$ represents a connection weight between a hidden-layer network element and an output-layer network element, $y_j$ is a hidden-layer output, and $\theta_k$ is an output-layer neural unit threshold;
a hidden-layer network element output algorithm, for example, $y_j = f(\sum w_{ij} * x_i - \theta_j)$, where f is a non-linear function, $w_{ij}$ represents a connection weight between an input-layer network element i and a hidden-layer network element j, $x_i$ is an input-layer output, and $\theta_j$ is a hidden-layer neural unit threshold;
a weight list corresponding to each output-layer network element and hidden-layer network element;
an activation function used by each layer, for example, a sigmoid function; and
an error calculation function: a function used to reflect an error between an expected output of a neural network and a calculated output, for example,

$$E_p = 1/(2 * \sum (t_{pi} - o_{pi})^2),$$

where $t_{pi}$ represents an expected output value of a network element i, and $O_{pi}$ represents a calculated output value of the network element i.

The foregoing describes an analysis and structure decomposition of common machine learning algorithm models. These models can be further abstracted and combined. In an existing 3GPP intelligent network architecture, training and prediction in machine learning are integrated into one network element such as an NWDA for execution. In a subsequent prediction process, the NWDA receives data or a feature vector that is required for prediction and that is sent by a UPF, and the NWDA predicts a result and generates a policy. However, an exchange delay generated in this process is not suitable for a feature that has a very high real-time requirement, affecting service experience required by the feature that has a very high real-time requirement. In view of this, this application provides a machine learning-based data processing method. A second network element performs a training step in machine learning, and a first network element installs an algorithm model. In addition, the first network element has a capability of obtaining a feature value. Therefore, the first network element may perform, by using the algorithm model, prediction on data required for prediction, to separate a logical function of a model from a logical function of prediction in a network architecture, thereby reducing an exchange delay, and resolving the prior art-problem that service experience is affected due to an increase in the exchange delay.

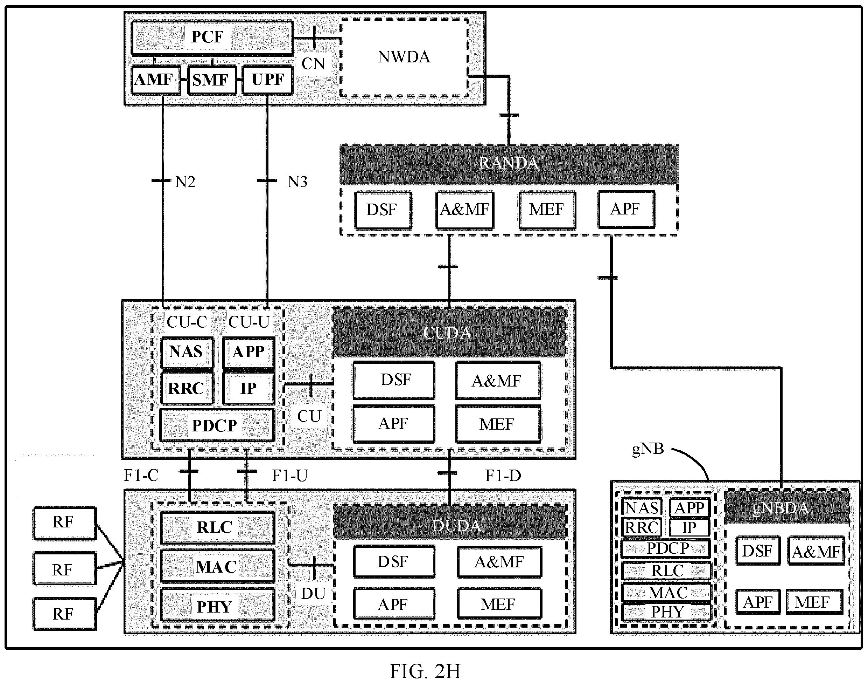

FIG. 2H is a diagram of a possible system architecture according to this application. In this figure, a machine learning process may be further decomposed into a data service function (data service function, DSF), an analysis and modeling function (analysis and modeling function, A&MF), a model execution function (model execution function, MEF), and an adaptive policy function (adapted policy function, APF) in terms of logical functions. It should be noted that these functions may alternatively be named in another naming manner. This is not limited herein. In FIG. 2H, these functions may be deployed, for execution, on network elements at all layers of a network as required, for example, a centralized unit (centralized unit, CU), a distributed unit (distributed unit, DU), and a gNBDAin a 5G network, or deployed on an LTE eNodeB, a UMTS RNC, or a NodeB. Alternatively, the functions may be independently deployed on a network element entity, and the network element entity may be referred to as a RAN data analysis network element (RAN data analysis, RANDA), or may be named in another manner.

Therefore, in the machine learning-based data processing method provided in this application, training and prediction in machine learning are separately performed by different network elements, and may be separately described based on the following two cases:

Case A: Functions (that is, the DSF, the MEF, and the APF) other than the A&MF in the foregoing four functions are deployed in an independent network entity.

Case B: The foregoing four functions (that is, the DSF, the A&MF, the MEF, and the APF) are abstracted and decomposed, and are separately deployed on network elements at each layer of the network.

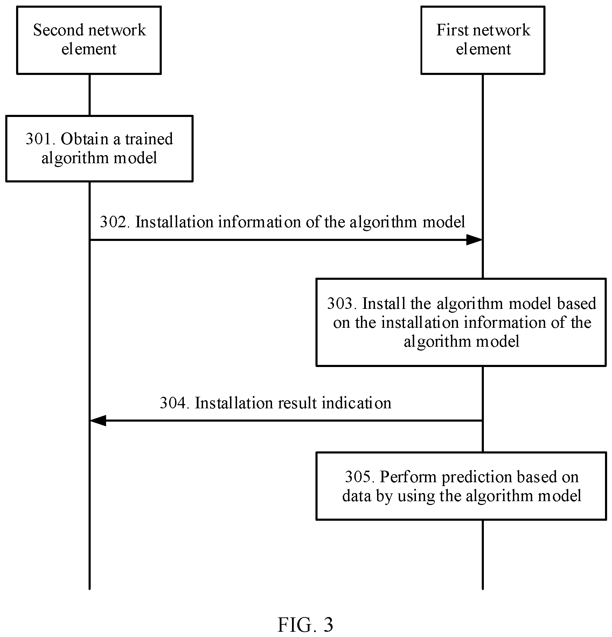

FIG. 3 is a possible machine learning-based data processing method that is based on the case A according to an embodiment of this application. The method includes the following steps.

301. A second network element obtains a trained algorithm model.

For ease of differentiation, in this embodiment, a network element that performs a prediction function is referred to as a first network element, and a network element that performs a training function is referred to as the second network element. The second network element selects, based on an actual intelligent service requirement, an appropriate algorithm, feature, and label data to train the algorithm model. The second network element finds an appropriate algorithm by using an objective to be achieved. For example, if the objective to be achieved is to predict a value of a target variable, a supervised learning algorithm may be selected. After the supervised learning algorithm is selected, if a type of the target variable is a discrete type, for example, Yes/No, or 1/2/3, a classifier algorithm in the supervised learning algorithm may be further selected. If the type of the target variable is a continuous value, a regression algorithm in the supervised learning algorithm may be selected. Feature selection is a process of selecting an optimal subset from an original feature set. In this process, excellence of a given feature subset is measured according to a specific evaluation criterion (evaluation criterion). A redundant (redundant) feature and an irrelevant feature in the original feature set are removed through feature selection, and a useful feature is retained.

It should be noted that, in an access network, the second network element may be a RANDA, or a CUDA (which may be understood as a name of a RANDA deployed on a CU) deployed on the CU, or an OSSDA (which may be understood as a name of a RANDA deployed on an OSS) deployed in the operation support system (operation support system, OSS), or a DUDA (which may be understood as a name of a RANDA deployed on a DU) deployed on the DU, or a gNBDA (which may be understood as a name of a RANDA deployed on a gNB) deployed on the gNB. In a core network, the second network element may be an NWDA, and is used as an independently deployed network element. The first network element may be a base station or a UPF. For example, in the core network, the first network element may be a UPF. In the access network, the first network element may be a base station. Therefore, this is not limited herein.

In addition, based on the foregoing algorithms, the second network element selects an appropriate algorithm, and selects an appropriate feature and label based on an actual service requirement. After the selected feature and label, and prepared training data are input into the algorithm, training is performed to obtain a trained algorithm model. To facilitate understanding of a training procedure, a neural network algorithm is used as an example to describe a general process of model training. The neural network is used in a task of supervised learning, that is, a large amount of training data is used to train a model. Therefore, selected label data is used as training data before a neural network algorithm model is trained.

The neural network algorithm model is trained based on the training data after the training data is obtained. The neural network algorithm model may include a generator and a discriminator. During actual application, an adversarial training idea may be used to alternately train the generator and the discriminator, and further to-be-predicted data are input into a finally obtained generator, to generate a corresponding output result. For example, the generator is a probability generation model and has an objective to generate a sample of which distribution is consistent with that of training data. The discriminator is a classifier and has an objective to accurately determine whether a sample is from training data or a generator. In this way, the generator and the discriminator are "adversaries". The generator is continuously optimized. Consequently, the discriminator cannot recognize a difference between a generated sample and a training data sample. The discriminator is continuously optimized, so that the discriminator can recognize the difference. The generator and the discriminator are trained alternately to finally achieve a balance. The generator can generate a sample of which distribution completely complies with that of the training data (where consequently, the discriminator cannot distinguish between the sample and the training data), and the discriminator can sensitively identify any sample of which distribution does not comply with that of the training data.

The discriminator performs model training on the generator based on the training data sample and the generated sample, discriminates, by using a model of the trained discriminator, a belonging probability of each generated sample generated by the generator, and sends a discrimination result to the generator. In this way, the generator performs model training based on a new generated sample discriminated by the discriminator and the discrimination result. Adversarial training is performed recurrently in this way, to improve a capability of generating the generated sample by the generator, and improve a capability of discriminating a belonging probability of the generated sample by the discriminator. To be specific, the discriminator and the generator are alternately trained in the adversarial training to finally achieve a balance. When the capability of the generator and the capability of the discriminator are trained to an extent, the discriminator discriminates that the belonging probability of the sample generated by the generator tends to stabilize. In this case, training of models of the generator and the discriminator may be stopped. For example, when the discriminator discriminates a belonging probability of a sample based on all obtained training data samples and generated samples, and a variation of a discrimination result obtained by the discriminator is less than a preset threshold, training on the neural network algorithm model may be ended.

Optionally, whether to stop training may be further determined by using a quantity of iterations of the generator and the discriminator as a determining condition, where the generator generating a generated sample once and the discriminator discriminating once the generated sample generated by the generator represents one iteration. For example, a 1000-time iteration indicator is set. If the generator has performed generation for 1000 times, training may be stopped. Alternatively, if the discriminator has performed discrimination for 1000 times, training may be stopped, to obtain a trained neural network algorithm model.

It should be noted that, with continuous development and update of artificial intelligence, training on an algorithm model is already a relatively mature technology, and training on a model corresponding to another algorithm such as a regression algorithm or a decision tree is not described herein.

302. The second network element sends installation information of the algorithm model to the first network element.

After obtaining the algorithm model through training, the second network element sends the installation information of the algorithm model to the first network element through the communications interface between the second network element and the first network element. The installation information of the algorithm model may be carried in a first message and the first message is sent to the first network element. The installation information of the algorithm model includes: a unique identifier ID of the algorithm model, an algorithm type indication of the algorithm model (where for example, the algorithm type indication indicates that an algorithm type of the algorithm model is linear regression or a neural network), a structure parameter of the algorithm model (where for example, a structure parameter of a linear regression model may include a regression value Z, a regression coefficient, a constant term, a step function, and the like), and an installation indication of the algorithm model (used to indicate the first network element to install the algorithm model). It should be noted that because structure parameters corresponding to algorithm types of algorithm models are different, during actual application, the installation information of the algorithm model may alternatively not include an algorithm type indication of the algorithm model, to be specific, the first network element may determine an algorithm type of an algorithm model by using a structure parameter of the algorithm model. Therefore, the algorithm type indication of the algorithm model may be optional, and this is not limited herein.

Optionally, the installation information of the algorithm model may further include policy index information, where the policy index information includes each prediction result of the algorithm model and identification information of a policy corresponding to each prediction result (for example, identification information of a policy corresponding to a prediction result 1 is an ID 1). The policy corresponding to the ID 1 is to set a QoS parameter value.

It should be noted that the second network element may further send collection information to the first network element by using the first message, so that the first network element subscribes to a feature vector based on the collection information and uses the feature vector as an input of the algorithm model. The collection information of the feature vector includes at least an identifier ID of a to-be-collected feature. The feature vector is a set of feature values of the to-be-collected feature. For ease of understanding a relationship among a feature, a feature value, and a feature vector, an example is used for description. For example, for a packet, if to-be-collected features are an IP address, an APP ID, and a port number, corresponding feature values may be 10.10.10.0, WeChat, and 21, and a feature vector is a set {10.10.10.0, WeChat, 21} of the feature values. Optionally, the collection information of the feature vector may further include a subscription periodicity of the feature vector. For example, the feature vector is collected every three minutes. In other words, a running parameter of the first network element may keep changing, and feature vectors of different data are collected at intervals of a subscription periodicity and are used as an input of the algorithm model for prediction.

Optionally, in addition to sending the collection information to the first network element by using the first message, the second network element may further send a second message to the first network element, where the second message carries the collection information. In addition, to enable the first network element to determine an algorithm model to which a subscribed feature vector serves, the second message further carries a unique identifier ID of the algorithm model. In conclusion, the collection information and the installation information that is of the algorithm model may be included in one message and the message is sent to the first network element, or may be divided into two messages and the two messages are sent to the first network element separately. It should be noted that, if the collection information and the installation information that is of the algorithm model are divided into the two messages and the two messages are sent to the first network element separately, a time sequence for sending the two messages by the second network element may be sending the first message first and then sending the second message, or sending the two messages simultaneously. This is not limited herein.

It should be noted that during actual application, the first message may be a model installation message (model install message), or another existing message, and this is not limited herein.

303. The first network element installs the algorithm model based on the installation information of the algorithm model.

After receiving the first message through the communications interface between the first network element and the second network element, the first network element obtains the installation information that is of the algorithm model and that is included in the first message, and then installs the algorithm model based on the installation information of the algorithm model. An installation process may include: determining, by the first network element, an algorithm type of the algorithm model, where a determining manner may be directly determining the algorithm type of the algorithm model by using the algorithm type indication in the first message, or correspondingly determining, when the first message does not include the algorithm type indication, the algorithm type of the algorithm model by using the structure parameter that is of the algorithm model and that is in the first message. For example, if the structure parameter of the algorithm model includes a feature vector x, a classification result z, a regression coefficient $w^T$ obtained through training, a constant term b, a step function, and a step function value separation interval threshold 0.5, the first network element may determine that the algorithm type of the algorithm model is logistic regression. After the algorithm type of the algorithm model is determined, the structure parameter of the algorithm model is used as a model composition parameter corresponding to the algorithm type of the algorithm model, to install the algorithm model. For ease of understanding, an example in which the algorithm type is a linear regression algorithm is used for description. If the algorithm type indication in the first message is used to indicate that the structure type of the algorithm model is a linear regression algorithm, and the structure parameter of the algorithm model includes a feature set (that is, a set of features), a corresponding regression coefficient $w^T$, and a constant term b. In this case, the first network element uses the structure parameter of the algorithm model as the model composition parameter and instantiates the structure parameter into a structure of the corresponding algorithm model. For example, a feature set of a linear regression model used to control a pilot power includes {RSRP, CQI, and TCP Load}, regression coefficients are {0.45, 0.4, and 0.15}, a constant term b is 60, and there is no step function (because this is linear regression but is not logistic regression). After receiving the model structure parameter, the first network element may locally instantiate the model.

Optionally, when both the installation information of the algorithm model and the collection information are included in one message, that is, when the first message further includes the collection information, the first network element needs to subscribe to a feature vector based on the collection information. A process of subscribing to a feature vector may include: determining, by the first network element based on the collection information, whether the first network element has a capability of providing a feature value of a to-be-collected feature. The first network element determines whether the first network element has the capability in a plurality of manners. For example, the first network element determines whether an identifier ID of the to-be-collected feature is included in preset information about a collectable feature, and if the identifier ID of the to-be-collected feature is included in the preset information about the collectable feature, the first network element determines that the first network element has the capability. On the contrary, if the identifier ID of the to-be-collected feature is not included in the preset information about the collectable feature, the first network element determines that the first network element does not have the capability. It may be understood as that each feature of which a feature value to be provided by the first network element has a unique number. For example, a number 1A corresponds to an RSRP, a number 2A corresponds to a channel quality indicator (channel quality indicator, CQI), and a number 3A corresponds to a signal to interference plus noise ratio (signal to interference plus noise ratio, SINR). These numbers may be used as the preset information about the collectable feature. If a number corresponding to a to-be-collected feature is not included in the preset information about the collectable feature, a feature value of the to-be-collected feature is not provided. Therefore, if the first network element determines that the first network element has a capability of providing the feature value of the to-be-collected feature, the first network element succeeds in subscribing to the feature vector. Correspondingly, if the first network element determines that the first network element does not have a capability of providing the feature value of the to-be-collected feature, the first network element fails to subscribe to the feature vector. It should be noted that if the first network element fails to subscribe to the feature vector, the first network element further needs to feed back a subscription failure message to the second network element, where the subscription failure message needs to carry identification information of a feature that cannot be obtained.

Optionally, when the installation information of the algorithm model and the collection information are not in one message, that is, when the first network element further receives a second message from the second network element, and obtains the collection information included in the second message, the first network element may subscribe to the feature vector based on the collection information in the second message. A process of subscribing to the feature vector is not described herein again.

304. The first network element sends an installation result indication to the second network element.

Optionally, in response to the first message, the first network element sends a first response message to the second network element through the communications interface between the first network element and the second network element, where the first response message carries the installation result indication, and the first response message includes the unique identifier ID of the algorithm model. For example, when the first network element succeeds in installing the algorithm model, the installation result indication is used to indicate, to the second network element, that the algorithm model is successfully installed, or when the first network element fails to install the algorithm model, the installation result indication is used to indicate, to the second network element, that the algorithm model fails to be installed. In this case, optionally, the first response message further carries an installation failure cause indication used to notify the second network element of an installation failure cause. An installation failure may be caused by an excessively large algorithm model, an invalid parameter in the installation information of the algorithm model, or the like. This is not limited herein.

Optionally, if the first network element further receives the collection information from the second network element to subscribe to the feature vector, the first network element may send a feature vector subscription result indication to the second network element, to indicate whether the feature vector is successfully subscribed to. It should be noted that if both the installation information of the algorithm model and the collection information are carried in the first message, the corresponding first response message also carries the feature vector subscription result indication. Optionally, if the feature vector subscription result indication is used to indicate that the feature vector subscription fails, the first response message further carries identification information of a feature that cannot be obtained.

Optionally, if the second network element sends the collection information to the first network element by using the second message, in response to the second message, the first network element sends a second response message to the second network element through the communications interface between the first network element and the second network element, where the second response message carries the feature vector subscription result indication. Optionally, if the feature vector subscription result indication is used to indicate that the feature vector subscription fails, the second response message further carries identification information of a feature that cannot be obtained.

It should be noted that during actual application, the first response message may be a model installation response (model install response) message, or another existing message, and this is not limited herein.

305. The first network element performs prediction on data by using the algorithm model.

After the first network element subscribes to the feature vector and succeeds in installing the algorithm model, the first network element starts to perform a prediction function. To be specific, the first network element performs prediction on data by using the installed algorithm model, including: collecting, by the first network element, data. During actual application, the data collected by the first network element may be, but is not limited to, any one of the following: 1. a parameter of a running status of the first network element, such as central processing unit (central processing unit, CPU) usage, memory usage, and a packet transmission rate; 2. packet feature data that passes through the first network element, such as a packet size and a packet interval; and 3. RRM/RRT-related parameters of a base station, such as an RSRP and a CQI. Data collected by the first network element is not limited herein.

After collecting the data, the first network element obtains a target feature vector of the data by using the identifier ID of the to-be-collected feature in the collection information. The first network element inputs the target feature vector into the algorithm model to obtain a target prediction result. It should be noted that the target prediction result may be a value or a classification. After obtaining the target prediction result, the first network element finds, from the policy index information, identification information of a target policy corresponding to the target prediction result, so that the first network element can index the target policy based on the identification information of the target policy, and execute the target policy on the data collected by the first network element.

It should be noted that during actual application, after installing the algorithm model, the first network element may further perform another operation, for example, deletion or modification, on the algorithm model based on an actual requirement. For example, performing, by the first network element, the another operation on the installed algorithm model may include: receiving, by the first network element, a third message from the second network element through the communications interface between the first network element and the second network element, where the third message carries at least a unique identifier ID of the algorithm model, and the third message is used to indicate the first network element to perform a target operation on the algorithm model. The target operation may include one of the following operations: modifying the algorithm model (model modification), deleting the algorithm model (model delete), activating the algorithm model (model active), or deactivating the algorithm model (model de-active). It should be noted that, for different operations, information carried in the third message may be different. For example, when the target operation is deleting, activating, or deactivating the algorithm model, the third message may carry the unique identifier ID of the algorithm model. When the target operation is modifying the algorithm model, the third message further includes modified installation information of the algorithm model, so that the first network element can modify the algorithm model based on the modified installation information of the algorithm model.

In this embodiment of this application, the second network element performs a training step in machine learning, and the first network element installs the algorithm model, and performs, by using the algorithm model, prediction based on the data collected by the first network element, so that a logical function of a model is separated from a logical function of prediction in a network architecture, and after obtaining feature values of a feature to obtain a feature vector, the first network element can perform prediction by using the installed algorithm model, thereby reducing an exchange delay, and resolving the prior-art problem that service experience is affected due to an increase in the exchange delay.

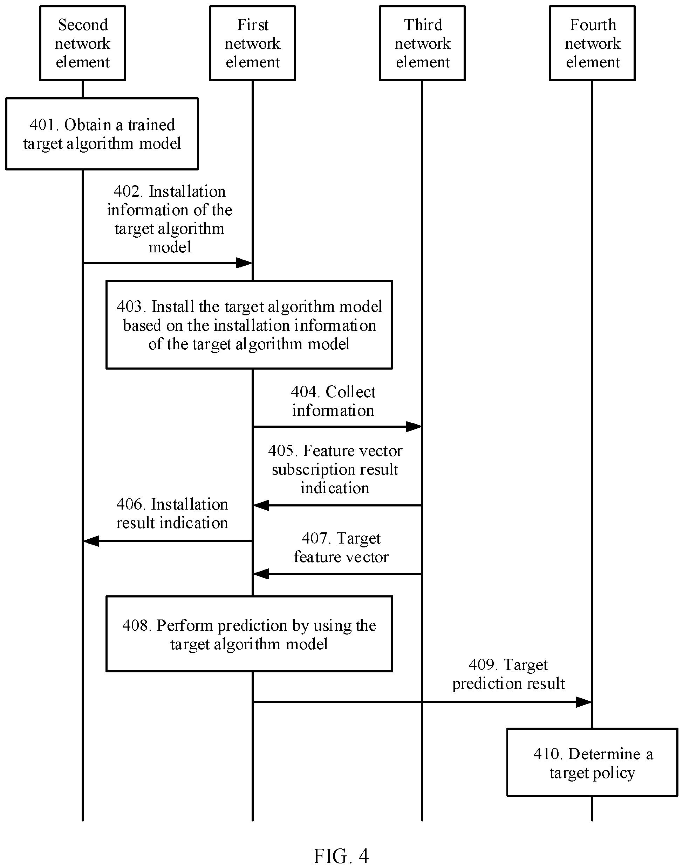

It should be noted that, based on function decomposition of the intelligent network element, functions of the DSF, the A&MF, the MEF, and the APF are abstracted from a logical function type in a machine learning process. The four types of logical functions may be deployed on each distributed unit, and one or more of the four types of logical functions are performed. For ease of understanding, in this embodiment, a network element that performs the A&MF function is referred to as the second network element, a network element that performs the MEF is referred to as the first network element, a network element that performs the DSF is referred to as a third network element, and a network element that performs the APF is referred to as a fourth network element. Based on this, referring to FIG. 4, an embodiment of this application provides a possible machine learning-based data processing method based on the case B, including the following steps.

401. A second network element obtains a trained target algorithm model.

402. The second network element sends installation information of the target algorithm model to a first network element.

403. The first network element installs the target algorithm model based on the installation information of the target algorithm model.

In this embodiment of this application, step 401 to step 403 are similar to step 301 to step 303 in FIG. 3, and details are not described herein again.

404. The first network element sends collection information to a third network element.

In step 402, the second network element may send a first message that carries the collection information to the first network element, or the second network element sends a second message to the first network element, where the second message carries the collection information and a unique identifier ID of the target algorithm model.

Therefore, when the collection information is carried in the first message, the first network element receives and decodes the first message, separates the collection information from the first message, and sends a separate third message (for example, a feature subscription message (feature subscribe message) or another existing message) that carries the collection information. The first network element sends the third message to the third network element through a communications interface between the first network element and the third network element, so that the third network element obtains, based on the collection information included in the third message, a target feature vector of data collected by the first network element. During actual application, the algorithm model may include a plurality of models. Therefore, the third network element may need to provide feature vectors to be input by the models for the plurality of models. To help the third network element determine an algorithm model served by a subscribed feature vector, in this application, at least one model in the algorithm model is referred to as the target algorithm model. Therefore, the third message further includes the unique identifier ID of the target algorithm model.

Optionally, when the collection information is carried in the second message, the first network element may forward the received second message to the third network element through the communications interface between the first network element and the third network element.

Optionally, the second network element may directly send the collection information to the third network element. For example, the second network element sends a fourth message to the third network element, where the fourth message carries the collection information and the unique identifier ID of the target algorithm model. Therefore, a manner in which the third network element receives the collection information of the feature vector is not limited herein.

405. The third network element sends a feature vector subscription result indication to the first network element.

After obtaining the collection information to subscribe to the feature vector, the third network element determines whether the third network element has a capability of providing a feature value of a to-be-collected feature. It should be noted that a manner in which the third network element determines whether the third network element has the capability of providing the feature value of the to-be-collected feature in this embodiment is similar to the manner in which the first network element determines whether the first network element has the capability of providing the feature value of the to-be-collected feature in step 303 in FIG. 3, and details are not described herein again.

Optionally, the third network element sends the feature vector subscription result indication to the first network element, to indicate whether feature vector subscription succeeds to the first network element. It should be noted that if the collection information is sent by the first network element to the third network element by using the third message, correspondingly, the third network element may send the feature vector subscription result indication to the first network element by using a third response message, where the third response message further carries the unique identifier ID of the target algorithm model. Optionally, if the third network element determines that the third network element does not have the capability of providing the feature value of the to-be-collected feature, that is, the feature vector subscription result indication is used to indicate that the feature vector subscription fails, the third response message may further carry identification information of a feature that cannot be obtained.

Optionally, if the collection information obtained by the third network element is directly sent by the second network element to the third network element by using the fourth message, the third network element sends a fourth response message to the second network element, where the fourth response message carries a feature vector subscription result indication. Optionally, when the feature vector subscription result indication is used to indicate that the feature vector subscription fails, the fourth response message further carries identification information of a feature that cannot be obtained.

406. The first network element sends an installation result indication to the second network element.

In this embodiment of this application, step 406 is similar to step 304 in FIG. 3, and details are not described herein again.

407. The third network element sends the target feature vector to the first network element.

When the feature vector subscription result indication is used to indicate that the feature vector is successfully subscribed to, the third network element collects target data from the first network element, and obtains a feature value of a to-be-collected feature of the target data, to further obtain the target feature vector. Therefore, after obtaining the target feature vector, the third network element may send the target feature vector to the first network element by using a feature vector feedback message. The feature vector feedback message may be a feature feedback (feature report) message or another existing message, and the feature vector feedback message further carries the unique identifier ID of the target algorithm model.

Optionally, if the subscription to the feature vector is a recurring subscription, the third network element sends a feature vector feedback message to the first network element every other subscription periodicity.

408. The first network element performs prediction based on the target algorithm model.

After the first network element receives the feature vector feedback message, the identifier ID of the target algorithm model in the feature vector feedback message is indexed to the target algorithm model used to perform the prediction, and the target feature vector in the feature vector feedback message is input into the target algorithm model to obtain a corresponding target prediction result. It should be noted that the target prediction result may be a value, for example, a value in a continuous interval or a value in a discrete interval.

409. The first network element sends the target prediction result to the fourth network element.

After generating the target prediction result, the first network element sends the target prediction result to the fourth network element through a communications interface between the first network element and the fourth network element, where the target prediction result may be carried in a fifth message sent by the first network element to the fourth network element, and the fifth message may be a prediction indication message (prediction indication message) or another existing message. This is not limited herein.

It should be noted that, in addition to the target prediction result, the fifth message may further carry the unique identifier ID of the target algorithm model and target policy index information corresponding to the target algorithm model, so that the fourth network element determines, based on the fifth message, a target policy corresponding to the target prediction result.

410. The fourth network element determines the target policy.

After receiving the fifth message through the communications interface between the fourth network element and the first network element, the fourth network element performs decoding to obtain the unique identifier ID of the target algorithm model, the target prediction result, and the target policy index information corresponding to the target algorithm model that are carried in the fifth message, and then finds the identification information of the target policy corresponding to the target policy result from the target policy index information, that is, the fourth network element determines and obtains the target policy.

Optionally, the fourth network element may further determine whether the target policy is adapted to corresponding predicted data. For example, during actual application, when a base station is switched to, whether the target policy is adapted to corresponding predicted data needs to be determined based on not only a model prediction result, but also an actual running status of a network, for example, whether congestion occurs or another case. If the target policy is not adapted to corresponding predicted data, a new target policy needs to be determined.

Optionally, after determining the target policy, the fourth network element sends a fifth feedback message to the first network element, where the fifth feedback message may be a prediction response (prediction response) message or another existing message, the fifth feedback message is used to feed back the target policy corresponding to the target prediction result to the first network element, and the fifth feedback message carries the identification information of the target policy, so that the first network element can execute the target policy on the target data.

In this embodiment of this application, the logical functions are separated into four types of functions, and may be deployed on different physical devices as required, thereby improving network flexibility. In addition, an unnecessary function may not be deployed, to save network resources.

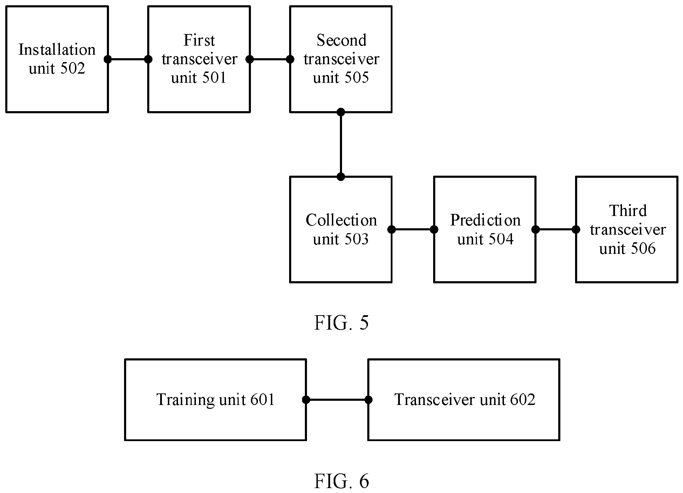

The foregoing describes the machine learning-based data processing method in the embodiments of this application. The following describes a network element in the embodiments of this application. FIG. 5 is an embodiment of a network element in the embodiments of this application. The network element may perform an operation of the first network element in the foregoing method embodiments. The network element includes:

a first transceiver unit 501, configured to receive installation information of at least one algorithm model from a second network element, where the second network element is configured to train the at least one algorithm model;
an installation unit 502, configured to install the at least one algorithm model based on the installation information that is of the at least one algorithm model and that is received by the transceiver unit;
a collection unit 503, configured to collect data; and
a prediction unit 504, configured to: after the installation unit succeeds in installing the at least one algorithm model, perform, by using the at least one algorithm model, prediction based on the data collected by the collection unit 504.

Optionally, in some possible implementations,
the first transceiver unit 501 is further configured to receive collection information from the second network element, where the collection information includes at least an identifier ID of a to-be-collected feature.

Optionally, in some possible implementations, the first network element may further include:
a second transceiver unit 505, configured to: send the collection information and a unique identifier ID of a target algorithm model to a third network element, where the target algorithm model is at least one model in the at least one algorithm model; and receive a target feature vector corresponding to the collection information and the unique identifier ID of the target algorithm model from the third network element, where the target algorithm model is used to perform a prediction operation.

Optionally, in some possible implementations, the first network element may further include:
a third transceiver unit 506, configured to: send the unique identifier ID of the target algorithm model, a target prediction result, and target policy index information corresponding to the target algorithm model to a fourth network element, where the target prediction result is used to determine a target policy, and the target prediction result is a result obtained by inputting a target feature vector into the target algorithm model; and receive the identification information of the target policy from the fourth network element.

Optionally, in some possible implementations, the first transceiver unit 501 may be further configured to:
receive a target operation indication and a unique identifier ID that is of the at least one algorithm model from the second network element, where the target operation indication is used to indicate the first network element to perform a target operation on the at least one algorithm model, and the target operation includes modifying the at least one algorithm model, deleting the at least one algorithm model, activating the at least one algorithm model, or deactivating the at least one algorithm model.

Optionally, the first transceiver unit 501 may be further configured to:
when the target operation is modifying the at least one algorithm model, receive installation information of the modified at least one algorithm model from the first second network element.

Optionally, the first transceiver unit 501 may be further configured to:
after the at least one algorithm model fails to be installed, send an installation failure cause indication to the second network element.

In this embodiment of this application, the second network element performs the training step in machine learning, the installation unit installs the algorithm model, and the prediction unit performs, by using the algorithm model, prediction based on the data received by the first network element. In this way, a logical function of a model is separated from a logical function of prediction in a network architecture. After the collection unit collects the data, the prediction unit may perform prediction based on the data by using the installed algorithm model, thereby reducing an exchange delay, and resolving the prior art-problem that service experience is affected due to an increase in the exchange delay. In addition, the logical function may be alternatively divided into four types of functions, and may be deployed on different physical devices as required, to improve network flexibility. In addition, an unnecessary function may not be deployed, to save network resources.

FIG. 6 is another embodiment of a network element in the embodiments of this application. The network element may perform an operation of the second network element in the foregoing method embodiments, and the network element includes:

a training unit 601, configured to obtain a trained algorithm model; and
a transceiver unit 602, configured to send installation information of the algorithm model to a first network element, where the installation information of the algorithm model is used to install the algorithm model, the algorithm model is used for performing prediction based on data, and the first network element is a UPF or a base station.

Optionally, in some possible implementations, the transceiver unit 602 is further configured to: when the first network element fails to install the algorithm model, receive an installation failure cause indication from the first network element.

Optionally, in some possible implementations, the transceiver unit 602 may be further configured to:
send collection information to the first network element, where the collection information includes at least an identifier ID of a to-be-collected feature.

In this embodiment of this application, the training unit of the second network element performs the training step in machine learning, and the first network element installs the algorithm model, and performs, by using the algorithm model, prediction based on the data received by the first network element. In this way, a logical function of a model is separated from a logical function of prediction in a network architecture. After collecting the data, the first network element may perform prediction based on the data by using the installed algorithm model, thereby reducing an exchange delay, and resolving the prior art-problem that service experience is affected due to an increase in the exchange delay. In addition, the logical function may be alternatively divided into four types of functions, and may be deployed on different physical devices as required, to improve network flexibility. In addition, an unnecessary function may not be deployed, to save network resources.

The first network element and the second network element in the embodiments of this application are separately described in detail from a perspective of a modular function entity in FIG. 5 and FIG. 6. The first network element and the second network element in the embodiments of this application are described in detail below from a perspective of hardware processing.

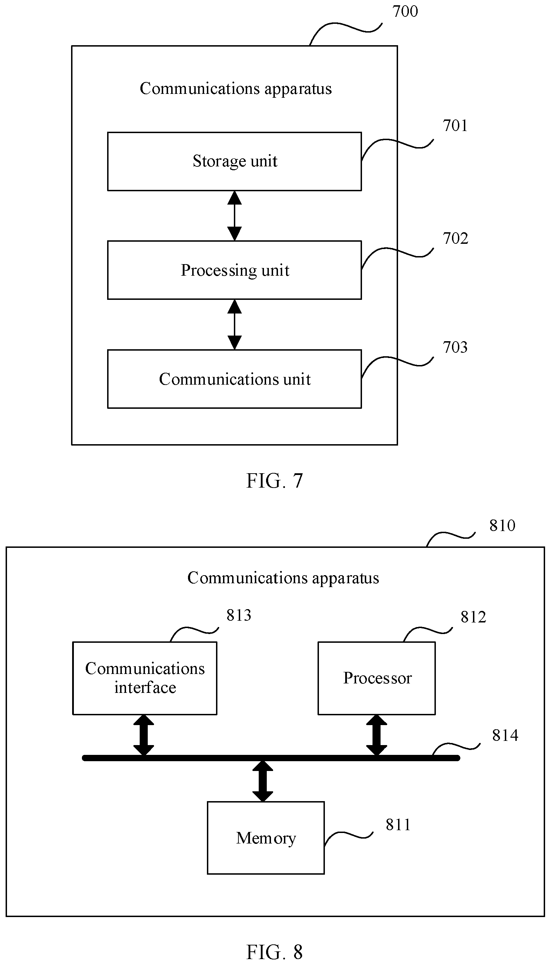

Referring to FIG. 7, if an integrated unit is used, FIG. 7 is a possible schematic structural diagram of a communications apparatus. The apparatus 700 includes a processing unit 702 and a communications unit 703. The processing unit 702 is configured to control and manage an action of the communications apparatus. The communications apparatus 700 may further include a storage unit 701, configured to store program code and data that are required by the communications apparatus.

In an embodiment, the communications apparatus may be the first network element. For example, the processing unit 702 is configured to support the first network element in performing step 303 and step 305 in FIG. 3, step 403 and step 408 in FIG. 4, and/or another process of the technology described in this specification. The communications unit 703 is configured to support the first network element in communicating with another device. For example, the communications unit 703 is configured to support the first network element in performing step 302 and step 304 in FIG. 3, step 402, step 404 to step 407, and step 409 in FIG. 4.

In another embodiment, the communications apparatus may be the second network element. For example, the processing unit 702 is configured to support the second network element in performing step 301 in FIG. 3, and step 401 in FIG. 4, and/or another process of the technology described in this specification. The communications unit 703 is configured to support the second network element in communicating with another device. For example, the communications unit 703 is configured to support the second network element in performing step 302 and step 304 in FIG. 3, and step 402 and step 406 in FIG. 4.

The processing unit 702 may be a processor or a controller, and for example, may be a central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA), or another programmable logical device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The communications unit 703 may be a communications interface, a transceiver, a transceiver circuit, or the like. The communications interface is a collective term, and may include one or more interfaces such as transceiver interfaces. The storage unit 701 may be a memory.

The processing unit 702 may be a processor, the communications unit 703 may be a communications interface, and the storage unit 701 may be a memory. Referring to FIG. 8, the communications apparatus 810 includes a processor 812, a communications interface 813, and a memory 811. Optionally, the communications apparatus 810 may further include a bus 814. The communications interface 813, the processor 812, and the memory 811 may be connected to each other by using the bus 814. The bus 814 may be a peripheral component interconnect (peripheral component interconnect, PCI) bus, an extended industry standard architecture (extended industry standard architecture, EISA) bus, or the like. The bus 814 may be classified into an address bus, a data bus, a control bus, and the like. For ease of representation, only one thick line is used to represent the bus in FIG. 8, but this does not mean that there is only one bus or only one type of bus.

Similarly, in an embodiment, the communications apparatus 810 may be configured to indicate the steps of the first network element. In another embodiment, the communications apparatus 810 may be configured to indicate the steps of the second network element. Details are not described herein again.

An embodiment of this application further provides an apparatus. The apparatus may be a chip. The apparatus may include a memory, and the memory is configured to store an instruction. When the instruction stored in the memory is executed by the processor, the processor is enabled to perform some or all steps of the first network element in the machine learning-based data processing method in the embodiments in FIG. 3 and FIG. 4, for example, step 303 and step 305 in FIG. 3, and step 403 and step 408 in FIG. 4. and/or another process of the technology described in this application. Alternatively, when the instruction stored in the memory is executed by the processor, the processor is enabled to perform some or all steps of the second network element in the machine learning-based data processing method in the embodiments in FIG. 3 and FIG. 4, for example, step 301 in FIG. 3, step 401 in FIG. 4. and/or another process of the technology described in this application.

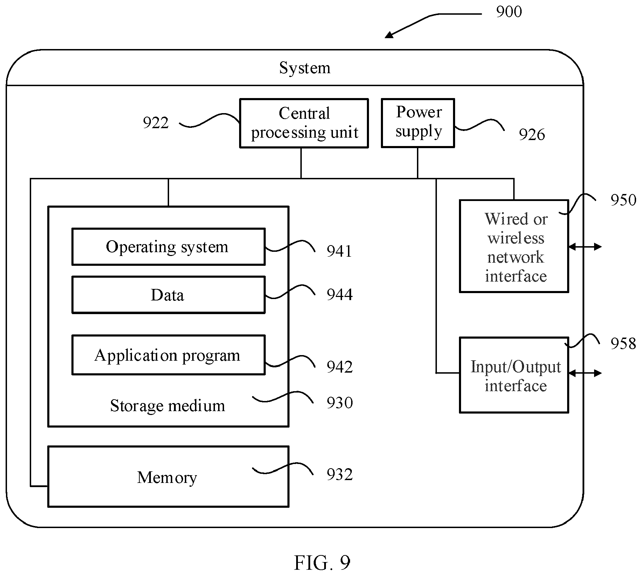

An embodiment of this application further provides a system. FIG. 9 is a schematic structural diagram of a possible system according to this application. The system may include one or more central processing units 922 and a memory 932, one or more storage media 930 (for example, one or more mass storage devices) that store an application program 942 or data 944. The memory 932 and the storage medium 930 may be used for temporary storage or permanent storage. The program stored in the storage medium 930 may include one or more modules (not shown in the figure), and each module may include a series of instruction operations for the system. Further, the central processing unit 922 may be configured to communicate with the storage medium 930 to perform, in the system 900, a series of instruction operations in the storage medium 930. The system 900 may further include one or more power supplies 926, one or more wired or wireless network interfaces 950, one or more input/output interfaces 958, and/or one or more operating systems 941 such as Windows Server, Mac OS X, Unix, Linux, and FreeBSD.

The embodiments of the machine learning-based data processing methods described in FIG. 3 and FIG. 4 may be implemented based on the system structure shown in FIG. 9.

All or some of the foregoing embodiments may be implemented by using software, hardware, firmware, or any combination thereof. When software is used to implement the embodiments, the embodiments may be implemented completely or partially in a form of a computer program product.

The computer program product includes one or more computer instructions. When the computer program instructions are loaded and executed on the computer, the procedure or functions according to the embodiments of this application are all or partially generated. The computer may be a general-purpose computer, a special-purpose computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

# EP 3 734 518 A1

**Claims**

1. A machine learning-based data processing method, comprising:

   receiving, by a first network element, installation information of at least one algorithm model from a second network element, wherein the first network element is a user plane network element UPF or a base station, and the second network element is configured to train the at least one algorithm model;
   installing, by the first network element, the at least one algorithm model based on the installation information of the at least one algorithm model; and
   collecting, by the first network element, data after the at least one algorithm model is successfully installed, and performing prediction based on the data by using the at least one algorithm model.

2. The method according to claim 1, wherein the installation information of the at least one algorithm model comprises the following information: a unique identifier ID of the at least one algorithm model, an algorithm type of the at least one algorithm model, a structure parameter of the at least one algorithm model, and an installation indication of the at least one algorithm model, wherein the installation indication of the at least one algorithm model is used to indicate to install the at least one algorithm model.

3. The method according to claim 2, wherein the installation information of the at least one algorithm model further comprises policy index information, and the policy index information comprises a prediction result of the at least one algorithm model and identification information of a policy corresponding to the prediction result.

4. The method according to claim 2 or 3, wherein before the collecting, by the first network element, data, the method further comprises:
   receiving, by the first network element, collection information from the second network element, wherein the collection information comprises at least an identifier ID of a to-be-collected feature.

5. The method according to claim 4, wherein after the receiving, by the first network element, collection information from the second network element, the method further comprises:

   sending, by the first network element, the collection information and a unique identifier ID of a target algorithm model to a third network element, wherein the target algorithm model is at least one model in the at least one algorithm model; and
   receiving, by the first network element, a target feature vector corresponding to the collection information and the unique identifier ID of the target algorithm model from the third network element, wherein the target algorithm model is used to perform a prediction operation.

6. The method according to claim 5, wherein the method further comprises:

   sending, by the first network element, the unique identifier ID of the target algorithm model, a target prediction result, and target policy index information corresponding to the target algorithm model to a fourth network element, wherein the target prediction result is used to determine a target policy, and the target prediction result is a result obtained by inputting the target feature vector into the target algorithm model; and
   receiving, by the first network element, identification information of the target policy from the fourth network element.

7. The method according to any one of claims 1 to 6, wherein after the at least one algorithm model is successfully installed, the method further comprises:
   receiving, by the first network element, a target operation indication and the unique identifier ID that is of the at least one algorithm model from the second network element, wherein the target operation indication is used to indicate the first network element to perform a target operation on the at least one algorithm model, and the target operation comprises modifying the at least one algorithm model, deleting the at least one algorithm model, activating the at least one algorithm model, or deactivating the at least one algorithm model.

8. The method according to claim 7, wherein when the target operation is modifying the at least one algorithm model, the method further comprises:
   receiving, by the first network element, installation information of the modified at least one algorithm model from the second network element.

9. The method according to any one of claims 1 to 8, wherein after the at least one algorithm model fails to be installed, the method further comprises:
sending, by the first network element, an installation failure cause indication to the second network element.

10. A machine learning-based data processing method, comprising:

obtaining, by a second network element, a trained algorithm model; and
sending, by the second network element, installation information of the algorithm model to a first network element, wherein the installation information of the algorithm model is used to install the algorithm model, the algorithm model is used for performing prediction based on data, and the first network element is a user plane network element UPF or a base station.

11. The method according to claim 10, wherein the installation information of the algorithm model comprises the following information: a unique identifier ID of the algorithm model, an algorithm type of the algorithm model, a structure parameter of the algorithm model, and an installation indication of the algorithm model, wherein the installation indication of the algorithm model is used to indicate the first network element to install the algorithm model.

12. The method according to claim 10 or 11, wherein the installation information of the algorithm model further comprises policy index information, and the policy index information comprises a prediction result of the algorithm model and identification information of a policy corresponding to the prediction result.

13. The method according to any one of claims 10 to 12, wherein after the sending, by the second network element, installation information of the algorithm model to a first network element, the method further comprises:
receiving, by the second network element, an installation failure cause indication from the first network element when the first network element fails to install the algorithm model.

14. The method according to any one of claims 10 to 13, wherein the method further comprises:
sending, by the second network element, collection information to the first network element, wherein the collection information comprises at least an identifier ID of a to-be-collected feature.

15. A network element, wherein the network element is a first network element, and the first network element is a user plane network element UPF or a base station, and comprises:

a first transceiver unit, configured to receive installation information of at least one algorithm model from a second network element, wherein the second network element is configured to train the at least one algorithm model;
an installation unit, configured to install the at least one algorithm model based on the installation information that is of the at least one algorithm model and that is received by the transceiver unit;
a collection unit, configured to collect data; and
a prediction unit, configured to: after the installation unit succeeds in installing the at least one algorithm model, perform, by using the at least one algorithm model, prediction based on the data collected by the collection unit.

16. The network element according to claim 15, wherein the installation information of the at least one algorithm model comprises the following information: a unique identifier ID of the at least one algorithm model, an algorithm type of the at least one algorithm model, a structure parameter of the at least one algorithm model, and an installation indication of the at least one algorithm model, wherein the installation indication of the at least one algorithm model is used to indicate to install the at least one algorithm model.

17. The network element according to claim 16, wherein the installation information of the at least one algorithm model further comprises policy index information, and the policy index information comprises a prediction result of the at least one algorithm model and identification information of a policy corresponding to the prediction result.

18. The network element according to claim 16 or 17, wherein the first transceiver unit is further configured to:
receive collection information from the second network element, wherein the collection information comprises at least an identifier ID of a to-be-collected feature.

19. The network element according to claim 18, wherein the network element further comprises:

a second transceiver unit, configured to send the collection information and a unique identifier ID of a target algorithm model to a third network element, wherein the target algorithm model is at least one model in the at least one algorithm model; and

the second transceiver unit is further configured to receive a target feature vector corresponding to the collection information and the unique identifier ID of the target algorithm model from the third network element, wherein the target algorithm model is used to perform a prediction operation.

20. The network element according to claim 19, wherein the network element further comprises:

a third transceiver unit, configured to send the unique identifier ID of the target algorithm model, a target prediction result, and target policy index information corresponding to the target algorithm model to a fourth network element, wherein the target prediction result is used to determine a target policy, and the target prediction result is a result obtained by inputting the target feature vector into the target algorithm model; and

the third transceiver unit is further configured to receive identification information of the target policy from the fourth network element.

21. The network element according to any one of claims 15 to 20, wherein the first transceiver unit is further configured to: receive a target operation indication and the unique identifier ID that is of the at least one algorithm model from the second network element, wherein the target operation indication is used to indicate the first network element to perform a target operation on the at least one algorithm model, and the target operation comprises modifying the at least one algorithm model, deleting the at least one algorithm model, activating the at least one algorithm model, or deactivating the at least one algorithm model.

22. The network element according to claim 21, wherein when the target operation is modifying the at least one algorithm model, the first transceiver unit is further configured to:
receive installation information of the modified at least one algorithm model from the second network element.

23. The network element according to any one of claims 15 to 22, wherein after the at least one algorithm model fails to be installed, the first transceiver unit is further configured to:
send an installation failure cause indication to the second network element.

24. A network element, wherein the network element is a second network element, and comprises:

a training unit, configured to obtain a trained algorithm model; and

a transceiver unit, configured to send installation information of the algorithm model to a first network element, wherein the installation information of the algorithm model is used to install the algorithm model, the algorithm model is used for performing prediction based on data, and the first network element is a user plane network element UPF or a base station.

25. The network element according to claim 24, wherein the installation information of the algorithm model comprises the following information: a unique identifier ID of the algorithm model, an algorithm type of the algorithm model, a structure parameter of the algorithm model, and an installation indication of the algorithm model, wherein the installation indication of the algorithm model is used to indicate the first network element to install the algorithm model.

26. The network element according to claim 25, wherein the installation information of the algorithm model further comprises policy index information, and the policy index information comprises an output result of the algorithm model and identification information of a policy corresponding to the output result.

27. The network element according to any one of claims 24 to 26, wherein the transceiver unit is further configured to: receive an installation failure cause indication from the first network element when the first network element fails to install the algorithm model.

28. The network element according to any one of claims 24 to 26, wherein the transceiver unit is further configured to: send collection information to the first network element, wherein the collection information comprises at least an identifier ID of a to-be-collected feature.

29. A computer-readable storage medium, comprising an instruction, wherein when the instruction is run on a computer, the computer is enabled to perform the method according to any one of claims 1 to 14.

**30.** A computer program product that comprises an instruction, wherein when the computer program product runs on a computer, the computer is enabled to perform the method according to any one of claims 1 to 14.

FIG. 1

FIG. 2A

FIG. 2B

FIG. 2C

**Decision Forest**

tree $T$ v

$P_T$ (v)

FIG. 2D

FIG. 2E

FIG. 2F

$w_{ij}$  $T_{jk}$

Input layer

Output layer

Hidden layer

$x_i$ ⟶ $y_j$ ⟶ $z_k$ ⟵ $o_k$  Target

FIG. 2G

FIG. 2H

FIG. 3

| Second network element | First network element | Third network element | Fourth network element |

**401.** Obtain a trained target algorithm model

**402.** Installation information of the target algorithm model

**403.** Install the target algorithm model based on the installation information of the target algorithm model

**404.** Collect information

**405.** Feature vector subscription result indication

**406.** Installation result indication

**407.** Target feature vector

**408.** Perform prediction by using the target algorithm model

**409.** Target prediction result

**410.** Determine a target policy

FIG. 4

Installation unit 502 — First transceiver unit 501 — Second transceiver unit 505

Second transceiver unit 505 — Collection unit 503 — Prediction unit 504 — Third transceiver unit 506

FIG. 5

Training unit 601 — Transceiver unit 602

FIG. 6

700

Communications apparatus

Storage unit 701

Processing unit 702

Communications unit 703

FIG. 7

810

Communications apparatus

Communications interface 813

Processor 812

814

Memory 811

FIG. 8

900

FIG. 9

# EP 3 734 518 A1

<table>
<tr><td colspan="2" align="center"><b>INTERNATIONAL SEARCH REPORT</b></td><td>International application No.<br><br><b>PCT/CN2018/121033</b></td></tr>
</table>

**A. CLASSIFICATION OF SUBJECT MATTER**

G06N 3/08(2006.01)i

According to International Patent Classification (IPC) or to both national classification and IPC

**B. FIELDS SEARCHED**

Minimum documentation searched (classification system followed by classification symbols)

G06N; H04L; G06F

Documentation searched other than minimum documentation to the extent that such documents are included in the fields searched

Electronic data base consulted during the international search (name of data base and, where practicable, search terms used)

CNPAT, EPODOC, WPI, CNKI: 网元, 节点, 网络, 平台, 架构, 网络, 服务器, 客户端, 分布, 算法, 模型, 学习, 训练, 预测, 安装, net element, node, web, network, platform, sever, client, model, algorithm, study, train, prediction, set

**C. DOCUMENTS CONSIDERED TO BE RELEVANT**

| Category* | Citation of document, with indication, where appropriate, of the relevant passages | Relevant to claim No. |
|---|---|---|
| X | CN 106663224 A (AMAZON TECHNOLOGIES INC.) 10 May 2017 (2017-05-10) description, paragraphs [0092]-[0098], [0124]-[0129] and [0399], and figures 1-2 | 1-30 |
| A | CN 102298569 A (MICROSOFT CORPORATION) 28 December 2011 (2011-12-28) entire document | 1-30 |
| A | CN 107229976 A (ZHENGZHOU YUNHAI INFORMATION TECHNOLOGY CO., LTD.) 03 October 2017 (2017-10-03) entire document | 1-30 |
| A | CN 106471851 A (OPENCODE SYSTEMS LTD.) 01 March 2017 (2017-03-01) entire document | 1-30 |
| A | CN 107577943 A (BEIJING QIHOO TECHNOLOGY CO., LTD.) 12 January 2018 (2018-01-12) entire document | 1-30 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 February 2019** | **13 March 2019** |

| Name and mailing address of the ISA/CN | Authorized officer |
|---|---|
| **State Intellectual Property Office of the P. R. China**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/121033**

| Patent document cited in search report | | | Publication date (day/month/year) | Patent family member(s) | | | Publication date (day/month/year) |
|---|---|---|---|---|---|---|---|
| CN | 106663224 | A | 10 May 2017 | CN | 106663037 | A | 10 May 2017 |
| | | | | US | 2015379423 | A1 | 31 December 2015 |
| | | | | CN | 106663038 | A | 10 May 2017 |
| | | | | WO | 2016004063 | A1 | 07 January 2016 |
| | | | | WO | 2016004075 | A1 | 07 January 2016 |
| | | | | JP | 2017527008 | A | 14 September 2017 |
| | | | | IN | 201717002981 | A | 16 June 2017 |
| | | | | IN | 201717002597 | A | 09 June 2017 |
| | | | | JP | 6419859 | B2 | 07 November 2018 |
| | | | | JP | 6445055 | B2 | 26 December 2018 |
| CN | 102298569 | A | 28 December 2011 | US | 2011320767 | A1 | 29 December 2011 |
| CN | 107229976 | A | 03 October 2017 | None | | | |
| CN | 106471851 | A | 01 March 2017 | SG | 11201609956W | A | 27 January 2017 |
| | | | | WO | 2015195579 | A1 | 23 December 2015 |
| | | | | KR | 20170018902 | A | 20 February 2017 |
| | | | | BR | 112016028415 | A2 | 22 August 2017 |
| | | | | MX | 2016016740 | A | 23 March 2017 |
| | | | | US | 2017280299 | A1 | 28 September 2017 |
| | | | | CA | 2952453 | A1 | 23 December 2015 |
| | | | | JP | 2017524914 | A | 31 August 2017 |
| | | | | US | 2015371139 | A1 | 24 December 2015 |
| | | | | AU | 2015277418 | A1 | 02 February 2017 |
| | | | | EP | 3180949 | A1 | 21 June 2017 |
| | | | | IN | 201717001052 | A | 05 May 2017 |
| CN | 107577943 | A | 12 January 2018 | None | | | |

Form PCT/ISA/210 (patent family annex) (January 2015)

**REFERENCES CITED IN THE DESCRIPTION**

**Patent documents cited in the description**

- CN 201810125826